# EUROPEAN PATENT APPLICATION

(11) **EP 1 424 339 A1**
(43) Date of publication of application: **02.06.2004**
(21) Application number: 01954462.6
(22) Date of filing: 06.08.2001
(51) Int. Cl.: C07F 7/08, G02C 7/04, C08F 20/10, C08F 20/52, C08F 12/22, C08F 12/14

(54) **MONOMERS, POLYMERS AND OPHTHALMIC LENSES**

(71) Applicant: Johson & Johnson Vision Care Inc., Jacksonville, FL 32256 (US)
(72) Inventor: NAKAMURA, Masataka, Otsu-shi, Shiga 520-0846 (JP); MORIKAWA, Yukie, Kusatsu-shi, Shiga 525-0055 (JP); YOKOTA, Mitsuru, Otsu-shi, Shiga 520-0804 (JP)
(74) Representative: Fisher, Adrian John
(86) International application number: PCT/JP2001/006741
(87) International publication number: WO 2003/027123

(57) **Abstract**

This invention has the objective of providing polymers having high oxygen permeability and high hydrophobicity and ophthalmic lenses comprising said polymers, and, as a result, provides novel monomers represented by general formula (a) below: 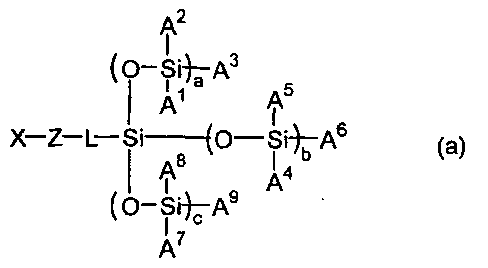 wherein, in formula (a), A¹ to A⁹ indicate groups selected from the group consisting of H, alkyl groups, aralkyl groups, aryl groups and alkyl groups having 1 to 9 carbon atoms substituted with at least one group selected from epoxy groups, hydroxyl groups and amino groups, with at least one of A¹ to A⁹ indicating said alkyl group of 1 to 9 carbon atoms substituted with at least one group selected from epoxy groups, hydroxyl groups and amino groups; a, b and c indicate 0 or 1; X indicates a polymerizable group having a carbon-carbon unsaturated bond; Z indicates groups selected from N-Y, O and S; Y indicates H, an alkyl group or an aryl group; and L indicates a divalent group having 1 to 10 carbon atoms.

## Description

### Technical Field

This invention relates to monomers and polymers comprising said monomers. Said polymers are particularly suited for ophthalmic lenses such as contact lenses, intraocular lenses and artificial corneas. Of these, they are most suitable for contact lenses.

### Prior Art

In recent years, methacrylates containing siloxanyl groups such as 3-methacryloxypropyltris (trimethylsiloxy) silane have been used as monomers for ophthalmic lenses. (For example, USP 3808178.)

However, although polymers comprising these monomers have the advantage of high oxygen permeability, they are also of high hydrophobicity, for which reason it is difficult to use them in ophthalmic lenses and contact lenses.

### Disclosure of the Invention

This invention has the objective of providing novel monomers, and, as a result, provides polymers having high oxygen permeability and high hydrophobicity and ophthalmic lenses comprising said polymers. In order to achieve these objectives, the monomers, polymers and ophthalmic lenses of this invention have the structure indicated below.
(1) A monomer that is represented by general formula (a) below: 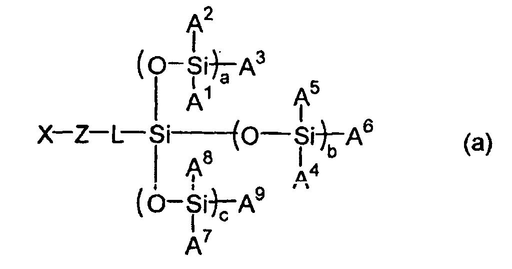 wherein, in formula (a), A¹ to A⁹, respectively and independently, indicate groups selected from the group consisting of H, alkyl groups having 1 to 8 carbon atoms, aralkyl groups having 6 to 12 carbon atoms, aryl groups having 6 to 10 carbon atoms and alkyl groups having 1 to 9 carbon atoms substituted with at least one group selected from epoxy groups, hydroxyl groups and amino groups, with at least one of A¹ to A⁹ indicating an alkyl group having 1 to 9 carbon atoms substituted with at least one group selected from epoxy groups, hydroxyl groups and amino groups; a, b and c, respectively and independently, indicate integers of 0 or 1; X indicates a polymerizable group having a carbon-carbon unsaturated bond; Z indicates groups selected from N-Y, O and S; Y indicates H or a substituent selected from an alkyl group having 1 to 8 carbon atoms that may be substituted and an aryl group having 6 to 10 carbon atoms that may be substituted; and L indicates a divalent group having 1 to 10 carbon atoms.
(2) A polymer comprising the monomer described in (1) above as a polymerization component.
(3) An ophthalmic lens which comprises the polymer described in (2) above.
(4) A contact lens which comprises the polymer described in (2) above.

### Embodiment of the Invention

We shall now describe the mode of execution of this invention.

The monomers of this invention are characterized in that they are represented by general formula (a) indicated below: 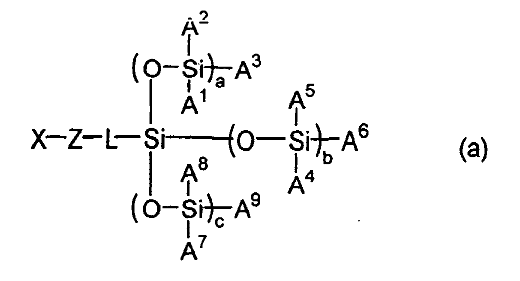 wherein, in formula (a), A¹ to A⁹, respectively and independently, indicate groups selected from the group consisting of H, alkyl groups having 1 to 8 carbon atoms, aralkyl groups having 6 to 12 carbon atoms, aryl groups having 6 to 10 carbon atoms and alkyl groups having 1 to 9 carbon atoms substituted with at least one group selected from epoxy groups, hydroxyl groups and amino groups, with at least one of A¹ to A⁹ indicating an alkyl group having 1 to 9 carbon atoms substituted with at least one group selected from epoxy groups, hydroxyl groups and amino groups; a, b and c, respectively and independently, indicate integers of 0 or 1; X indicates a polymerizable group having a carbon-carbon unsaturated bond; Z indicates groups selected from N-Y, O and S; Y indicates H or a substituent selected from an alkyl group having 1 to 8 carbon atoms that may be substituted and an aryl group having 6 to 10 carbon atoms that may be substituted; and L indicates a divalent group having 1 to 10 carbon atoms.

We shall now describe the substituted groups in formula (a).

In formula (a), A¹ to A⁹ indicate, respectively and independently, groups selected from the group consisting of H, alkyl groups with 1 to 8 carbon atoms, aralkyl groups with 6 to 12 carbon atoms, aryl groups with 6 to 10 carbon atoms and alkyl groups having 1 to 9 carbon atoms substituted with at least one group selected from epoxy groups, hydroxyl groups and amino groups, with at least one of A¹ to A⁹ indicating an alkyl group with 1 to 9 carbon atoms substituted with at least one group selected from epoxy groups, hydroxyl groups and amino groups. Specific examples include H; alkyl groups with 1 to 8 carbon atoms such as methyl groups, ethyl groups, propyl groups, isopropyl groups, butyl groups, isobutyl groups, sec-butyl groups, t-butyl groups, hexyl groups, cyclopentyl groups, cyclohexyl groups, 2-ethylhexyl groups and octyl groups; aralkyl groups with 6 to 12 carbon atoms such as benzyl groups and phenethyl groups; aryl groups with 6 to 10 carbon atoms such as phenyl groups and naphthyl groups; and alkyl groups with 1 to 9 carbon atoms substituted with at least one group selected from epoxy groups, hydroxyl groups and amino groups such as glycidoxypropyl groups, hydroxypropyl groups, hydroxyethoxypropyl groups, hydroxyethoxyethoxypropyl groups, hydroxyethoxyethoxyethoxypropyl groups and aminopropyl groups. Of these, H, methyl groups, glycidoxypropyl groups, hydroxypropyl groups, hydroxyethoxypropyl groups and aminopropyl groups are preferable.

a, b and c indicate, respectively and independently, integers of 0 or 1.

X indicates a polymerizable group that has a carbon-carbon unsaturated bond. Specific examples can include groups represented by formulas (x1) to (x6) below, and of these, the most desirable are groups represented by formula (x2): 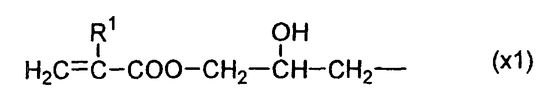 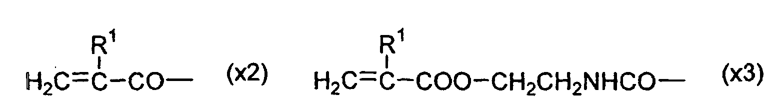 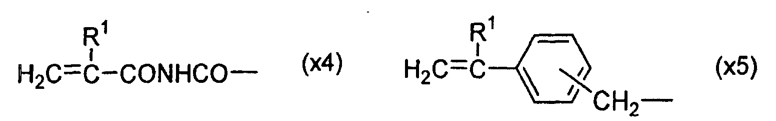 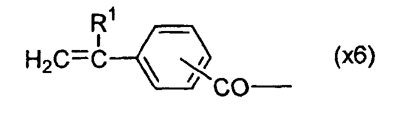 wherein, in formulas (x1) to (x6), R¹ indicates H or a methyl group.

Z indicates a group selected from N-Y, O and S. The most desirable is O.

Y indicates H or a substituent selected from alkyl groups with 1 to 8 carbon atoms that may be substituted and aryl groups with 6 to 10 carbon atoms that may be substituted. Desirable examples of these are indicated below. H is preferred. The alkyl groups with 1 to 8 carbon atoms that may be substituted may be straight chain and branched chain and include methyl groups, ethyl groups, propyl groups, butyl groups, isobutyl groups, hexyl groups, octyl groups, 2-ethylhexyl groups, allyl groups, 2-hydroxyethyl groups, 3-hydroxypropyl groups, 2,3-dihydroxypropyl groups, 4-hydroxybutyl groups, 2-(2-hydroxyethoxy) ethyl groups, 2-methoxyethyl groups, 3-methoxypropyl groups, 4-methoxybutyl groups, 2-(2-methoxyethoxy) ethyl groups, furfuryl groups, tetrahydrofurfuryl groups, methoxycarbonylmethyl groups, ethoxycarbonylmethyl groups, propoxycarbonylmethyl groups, methoxyethoxycarbonylmethyl groups, ethoxyethoxycarbonylmethyl groups, methoxyethoxyethoxycarbonylmethyl groups, ethoxyethoxyethoxycarbonylmethyl groups, methoxycarbonylethyl groups, ethoxycarbonylethyl groups, propoxycarbonylethyl groups, methoxyethoxycarbonylethyl groups, ethoxyethoxycarbonylethyl groups, methoxyethoxyethoxycarbonylethyl groups, ethoxyethoxyethoxycarbonylethyl groups, methoxycarbonylpropyl groups, ethoxycarbonylpropyl groups, propoxycarbonylpropyl groups, methoxyethoxycarbonylpropyl groups, ethoxyethoxycarbonypropyl groups, methoxyethoxyethoxycarbonylpropyl groups and ethoxyethoxyethoxycarbonylpropyl groups. The aryl groups of 6 to 10 carbon atoms that nay be substituted include phenyl groups, naphthyl groups, pyridyl groups, 4-methoxyphenyl groups, 2-methoxyphenyl groups, 4-hydroxyphenyl groups and 2-hydroxyphenyl groups.

L represents a divalent group of 1 to 10 carbon atoms. Desirable examples include groups represented by formulas (L1) to (L3) below. The group represented by formula (L2) is the most desirable.

-CH₂- (L1)

-CH₂CH₂CH₂- (L2)

-CH₂CH₂OCH₂CH₂CH₂- (L3)

In general formula (a), in order to increase oxygen permeability and hydrophilic properties, at least 2 of a, b and c should be 1 and at least 2 of A³, A⁶ and A⁹ should be an alkyl group of 1 to 9 carbon atoms substituted with at least one group selected from epoxy groups, hydroxy groups and amino groups. Further, it is more preferable that all of a, b and c may be 1 and all of A³, A⁶ and A⁹ may be an alkyl group of 1 to 9 carbon atoms substituted with at least one group selected from epoxy groups, hydroxy groups and amino groups.

The following method can be cited as a method of synthesis of the monomers represented by general formula (a). Specifically, it is a method in which a compound represented by general formula (a1): 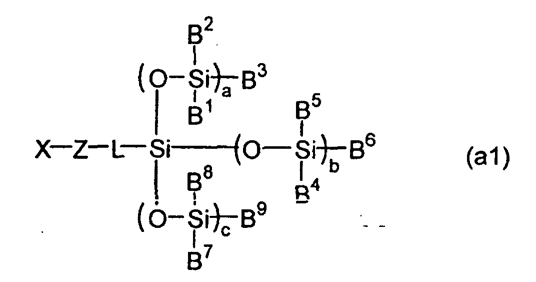 wherein, in formula (a1), B¹ to B⁹ indicate, respectively and independently, H, alkyl groups of 1 to 8 carbon atoms, aralkyl groups of 6 to 12 carbon atoms and aryl groups of 6 to 10 carbon atoms, with at least one of B¹ to B⁹ indicating H; and the other symbols have the same significance as those in formula (a).
and a compound having groups selected from epoxy groups, hydroxy groups and amino groups and carbon-carbon unsaturated bonds are reacted in the presence of a known hydrosilylation reaction catalyst. Specific examples of the compound having groups selected from epoxy groups, hydroxy groups and amino groups and carbon-carbon unsaturated bonds include allyl glycidyl ethers, allyl alcohols, ethylene glycol monoallyl ethers, diethylene glycol monoallyl ethers, triethyleneglycol monoallyl ethers and allylamines.

The catalysts that can be used at this time include platinum alone, catalysts composed of solid platinum on carriers such as alumina, silica and carbon black, chloroplatinic acid, complexes of chloroplatinic acid with alcohols, aldehydes and ketones, platinum-olefin complexes {for example, Pt(CH₂=CH₂)₂(PPh₃)₂Pt(CH₂=CH₂)₂Cl₂}: platinum-vinyl siloxane complexes {for example, Ptn(ViMe₂SiOSiMe₂Vi)ₘ, Pt[(MeViSiO)₄]ₘ}; platinum-phosphine complexes {for example, Pt(PPh₃)₄, Pt(PBu₃)₄}; platinum-phosphite complexes {for example, Pt[P(OPh)₃]₄, Pt(P(OBu)₃]₄} (in which formulas, Me is a methyl group, Bu is a butyl group, Vi is a vinyl group, Ph is a phenyl group and n and m are integers), dicarbonyl dichloroplatinum, platinum-hydrocarbon complexes as described in USP 3159601 and USP 3159662 of Ashby and platinum-alcoholate catalysts as described in USP 3220972 of Lamoreaux. In addition, platinum chloride-olefin complexes as described in USP 3516946 of Modic are useful. Examples of catalysts other than platinum compounds that can also be used include RhCl(PPh₃)₃, RhCl₃, Rh/Al₂O₃, RuCl₃, IrCl₃, FeCl₃, AlCl₃, PdCl₂·2H₂O, NiCl₂ and TiCl₄ (Ph indicating a phenyl group). These catalysts may be used individually or in combinations of two or more. From the standpoint of catalytic activity, chloroplatinic acid, platinum-olefin complexes and platinum-vinyl siloxane complexes are preferred.

There are no particular limitations on the portion of catalyst. However, it is desirable to use them in a range of 10⁻¹ to 10⁻⁸ mol, and, preferably, in a range of 10⁻³ to 10⁻⁶ mol, per 1 mol of Si-H. When the portion of catalyst is less than this, the reaction speed is not sufficient, and when the portion of catalysts exceeds this range, it is not economical.

The charging ratio of the compound represented by formula (a1) and the compound having groups selected from epoxy groups, hydroxy groups and amino groups and carbon-carbon unsaturated bonds should be such that the compound having groups selected from epoxy groups, hydroxy groups and amino groups and carbon-carbon unsaturated bonds is used in excess. Specifically, the compound having groups selected from epoxy groups, hydroxy groups and amino groups and carbon-carbon unsaturated bonds should be used in a range of 1.05 to 1,000 mol, and, preferably, in a range of 2 to 100 mol, per 1 mol of Si-H. When the quantity of compound having groups selected from epoxy groups, hydroxy groups and amino groups and carbon-carbon unsaturated bonds used is small, there is a tendency for the reaction purity to decrease, and, when the quantity is excessive, it is not economical.

The use of a solvent in the hydrosilylation reaction is not particularly necessary. However, there is no objection to using a suitable inactive organic solvent for the purpose of adjusting the viscosity of the reaction solution. Examples include aromatic hydrocarbon solvents such as benzene, toluene and xylene; aliphatic hydrocarbon solvents such as hexane and octane; ether solvents such as ethyl ether, butyl ether and tetrahydrofuran; ketone solvents such as methyl ethyl ketone; and halogenated hydrocarbon solvents such as trichloroethylene.

The reaction temperature should be 0 to 200°C, and, preferably, 10 to 150°C. When the reaction temperature is lower than 0°C, catalytic activity is insufficient, for which reason the reaction speed is slowed. Further, when it is higher than 150°C, there is a tendency for reaction purity to decrease.

After the reaction has been performed by this method, the solvent and the excess reactants that were used are removed under conditions of depressurization, by which means the monomers represented by formula (a) are obtained.

Increase of the purity of the monomer represented by general formula (a) and/or removal of the remaining hydrosilylation catalyst can be performed by various purification methods. Methods for increasing purity that can be cited include a depressurization distillation method (including a molecular distillation method) and column chromatography. Methods for removal of the hydrosilylation catalyst that can be cited include methods involving stirring treatments and column treatment with silica, silica gel, alumina and ion exchange resins, or methods in which washing is performed with neutral to weakly acidic aqueous solutions.

The polymers and ophthalmic lenses of this invention can be obtained from the monomers of this invention. The monomers of this invention can be polymerized individually or they can be copolymerized with other monomers. There are no particular limitations on the copolymerization monomers in the case of copolymerization with other monomers as long as they can be copolymerized. Monomers having (meth)acryloyl groups, styryl groups, allyl groups, vinyl groups and other copolymerizable carbon-carbpn unsaturated bonds can be used.

Examples of these are presented below. However, they are not limited to these examples. They include (meth)acrylic acid, itaconic acid, crotonic acid, cinnamic acid, vinyl benzoic acid, alkyl (meth)acrylates such as methyl (meth)acrylate and ethyl (meth)acrylate; polyfunctional (meth)acrylates such as polyalkylene glycol mono(meth)acrylate, polyalkylene glycol monoalkyl ether (meth)acrylate, polyalkylene glycol bis(meth)acrylate, trimethylol propanetris (meth)acrylate, pentaerythritol tetrakis (meth)acrylate and siloxane macromers having carbon-carbon unsaturated bonds in both terminals; halogenated alkyl (meth)acrylates such as trifluoroethyl (meth)acrylate and hexafluoroisopropyl (meth)acrylate; hydroxyalkyl (meth)acrylates having hydroxyl groups such as 2-hydroxyethyl (meth)acrylate and 2,3-dihydroxypropyl (meth)acrylate; (meth)acrylamides such as N,N-dimethylacrylamide, N,N-diethylacrylamide, N,N-di-n-propylacrylamide, N,N-diisopropylacrylamide, N,N-di-n-butylacrylamide, N-acryloylmorpholine, N-acryloylpiperidine, N-acryloylpyrrolidine and N-methyl (meth)acrylamide; aromatic vinyl monomers such as styrene, α-methylstyrene and vinyl pyridine; heterocyclic vinyl monomers such as maleimides and N-vinyl pyrrolidone; 3-[tris(trimethylsiloxy)silyl]propyl (meth)acrylate, 3-[bis(trimethylsiloxy)methylsilyl]propyl (meth)acrylate, 3-[(trimethylsiloxy)dimethylsilyl]propyl (meth)acrylate, 3-[tris(trimethylsiloxy)silyl]propyl (meth)acrylamide, 3- [bis(trimethylsiloxy)methylsilyl]propyl (meth)acrylamide, 3-[(trimethylsiloxy)dimethylsilyl]propyl (meth)acrylamide, [tris(trimethylsiloxy)silyl]methyl (meth)acrylate, [bis(trimethylsiloxy)methylsilyl] methyl (meth)acrylate, [(trimethylsiloxy)dimethylsilyl]methyl (meth)acrylate, [tris(trimethylsiloxy)silyl]methyl (meth)acrylamide, [bis(trimethylsiloxy)methylsilyl]methyl (meth)acrylamide, [(trimethylsiloxy)dimethylsilyl]methyl (meth)acrylamide, [tris(trimethylsiloxy)silyl] styrene, [bis(trimethylsiloxy)methylsilyl] styrene and [(trimethylsiloxy)dimethylsilyl] styrene.

In order to obtain polymers and ophthalmic lenses having good mechanical properties and good resistance to disinfectant solutions and washing solutions, it is desirable that monomers having two or more copolymerizable carbon-carbon unsaturated bonds per molecule be used as copolymerization components. The copolymerization ratio of monomers having two or more copolymerizable carbon-carbon unsaturated bonds per molecule should be greater than 0.1 weight %, preferably, greater than 0.3 weight %, and, more preferably, greater than 0.5 weight %. Weight % is the value obtained when the total weight of the monomer composition (except for the solvent component) is taken as 100%. The same holds hereafter.

From the standpoint of assuring high oxygen permeability, the polymerization ratio of the monomers of this invention in the polymers and ophthalmic lenses of this invention should be 30 weight % to 100 weight %, preferably, 40 weight % to 99 weight %, and, more preferably, 50 weight % to 95 weight %.

In order to facilitate polymerization when the polymers and ophthalmic lenses of this invention are obtained, thermal polymerization initiators and photopolymerization initiators of which peroxides and azo compounds are representative may be added. When thermal polymerization is performed, substances that have the optimum dissolution characteristics relative to the desired reaction temperature are selected and used. In general, azo initiators and peroxide initiators having 10 hour half-life temperatures of 40 to 120°C are desirable. Photopolymerozation initiators can include carbonyl compounds, peroxides, azo compounds, sulfur compounds, halides and metal salts. These polymerization initiators may be used independently or in mixtures, and they can be used in quantities up to approximately 1 weight %.

Polymerization solvents can be used when the polymers and ophthalmic lenses of this invention are obtained. There are no particular limitations on them and various types of organic and inorganic solvents can be used as solvents. Examples that can be cited include water; alcohol solvents such as methyl alcohol, ethyl alcohol, normal propyl alcohol, isopropyl alcohol, normal butyl alcohol, isobutyl alcohol and tert-butyl alcohol; glycol ether solvents such as methyl cellosolve, ethyl cellosolve, isopropyl cellosolve, butyl cellosolve, propylene glycol monomethyl ether, ethylene glycol dimethyl ether, diethylene glycol dimethyl ether and triethylene glycol dimethyl ether; ester solvents such as ethyl acetate, butyl acetate, amyl acetate, ethyl lactate and methyl benzoate; aliphatic hydrocarbon solvents such as normal hexane, normal heptane and normal octane; alicyclic hydrocarbon solvents such as cyclohexane and ethyl cyclohexane; ketone solvents such as acetone, methyl ethyl ketone and methyl isobutyl ketone; aromatic hydrocarbon solvents such as benzene, toluene and xylene; and various types of petroleum solvents. They can be used independently or in mixtures.

Known polymerization methods and molding methods can be used when the polymers and ophthalmic lenses of this invention are obtained. For example, there is a method in which they are polymerized and molded into rods or plates and are then processed to the desired shape by cutting processing, a mold polymerization method and a spin cast polymerization method.

As an example, we shall now describe the case in which the polymer of this invention is obtained from the monomers of this invention by the mold polymerization method.

The monomer composition is filled into the space of two molds having a fixed shape. Photopolymerization or thermal polymerization is performed and the composition is formed to the shape of the mold. The mold can be made of resin, glass, ceramics or metal. In the case of photopolymerization, a material that is optically transparent is used, and, ordinarily, resin or glass is used. In many cases, when a polymer is manufactured, a space is formed by the two opposing molds and the space is filled with the monomer composition. Depending on the shape of the mold and the property of the monomer, a gasket may be used for the purpose of conferring a fixed thickness on the polymer and of preventing leakage of the filled monomer composition solution. The mold into the space of which the monomer composition is filled is then irradiated with active light rays such as ultraviolet rays or is introduced into an oven or a water bath or oil bath, and is heated and polymerized. The two methods can also be used in combination, with thermal polymerization being performed after photopolymerization, or, conversely, it can be photopolymerization being performed after thermal polymerization. In the case of photopolymerization, for example, light containing a large quantity of ultraviolet rays is usually irradiated for a short time (ordinarily 1 hour or less) using a mercury lamp or an insect attraction lamp. When thermal polymerization is performed, the temperature is gradually raised from close to room temperature, being increased to a temperature of 60°C to 200°C over a period of several hours to several tens of hours. These conditions are desirable for the purpose of maintaining the optical homogeneity and quality of the polymer and of increasing its reproducibility.

The polymers and ophthalmic lenses of this invention can be subjected to modification treatments by various methods for the purpose of increasing water content, increasing surface wettability and decreasing modulus of elasticity.

Specific modification methods of the polymers and ophthalmic lenses of this invention can include electromagnetic wave (including light) irradiation, plasma irradiation, chemical vapor deposition treatments such as vaporization and sputtering, heating and boiling treatments, treatment with bases, treatment with acids and the use of other suitable surface treatment agents, and combinations of these methods. Of these modification procedures, treatment with bases and boiling treatment are desirable because they are simple.

We shall now describe the treatment with bases.

Examples of treatments with bases that can be cited include a method in which the polymer or ophthalmic lens is brought into contact with a basic solution and a method in which the polymer or ophthalmic lens is brought into contact with a basic gas. Specific examples of these methods include, for example, methods in which the polymer or ophthalmic lens is immersed in a basic solution, methods in which a basic solution or basic gas is sprayed at the polymer or ophthalmic lens, methods in which the basic solution is applied to the polymer or ophthalmic lens with a spatula or brush and methods in which the basic solution is applied to the polymer or ophthalmic lens by a spin coating method or a dip coating method. The method whereby great modifying effects can be obtained the most simply is the method in which the polymer or ophthalmic lens is immersed in the basic solution.

There are no particular limitations on temperature when the polymer or ophthalmic lens is immersed in the basic solution. However, the procedure is usually performed in a temperature range of -50°C to 300°C. When workability is considered, a temperature range of -10°C to 150°C is preferable and -5°C to 60°C is more preferable.

The optimum period for immersion of the polymer or ophthalmic lens in the basic solution varies depending on the temperature. In general, a period of up to 100 hours is desirable, a period of up to 24 hours is more preferable and a period of up to 12 hours is most preferable. When contact time is too long, workability and productivity deteriorate and there are instances in which there are such deleterious effects as decrease of oxygen permeability and decrease of mechanical properties.

The bases that can be used include alkali metal hydroxides, alkaline earth metal hydroxides, various carbonates, various borates, various phosphates, ammonia, various ammonium salts and various amines.

Various inorganic and organic solvents can be used as the solvents of the basic solution. For example, they can include water; various alcohols such as methanol, ethanol, propanol, 2-propanol, butanol, ethylene glycol, diethylene glycol, triethylene glycol, tetraethylene glycol, polyethylene glycol and glycerol; various aromatic hydrocarbons such as benzene, toluene and xylene; various aliphatic hydrocarbons such as hexane, heptane, octane, decane, petroleum ether, kerosene, ligroin and paraffin; various ketones such as acetone, methyl ethyl ketone and methyl isobutyl ketone; various esters such as ethyl acetate, butyl acetate, methyl benzoate and dioctyl phthalate; various ethers such as diethyl ether, tetrahydrofuran, dioxane, ethylene glycol dialkyl ether, diethylene glycol dialkyl ether, triethylene glycol dialkyl ether, tetraethylene glcyol dialkyl ether and polyethylene glycol dialkyl ether; various nonprotonic polar solvents such as dimethylformamide, dimethylacetamide, N-methyl-2-pyrrolidone, dimethylimidazolidinone, hexamethyl phosphoric triamine and dimethyl sulfoxide; halogen solvents such as methylene chloride, chloroform, dichloroethane trichloroethane and trichloroethylene; and freon solvents. Of these, water is the most desirable of the standpoints of economic factors, convenience in handling and chemical stability. These solvents can also be used in mixtures of two or more.

The basic solutions that are used in the treatment with bases may also contain components other than the basic substances and the solvents.

After the polymer and ophthalmic lens of this invention have been subjected to base treatment, the basic substance can be removed by washing. Various inorganic and organic solvents can be used as washing solvents. For example, they can include water; various alcohols such as methanol, ethanol, propanol, 2-propanol, butanol, ethylene glycol, diethylene glycol, triethylene glycol, tetraethylene glycol, polyethylene glycol and glycerol; various aromatic hydrocarbons such as benzene, toluene and xylene; various aliphatic hydrocarbons such as hexane, heptane, octane, decane, petroleum ether, kerosene, ligroin and paraffin; various ketones such as acetone, methyl ethyl ketone and methyl isobutyl ketone; various esters such as ethyl acetate, butyl acetate, methyl benzoate and dioctyl phthalate; various ethers such as diethyl ether, tetrahydrofuran, dioxane, ethylene glycol dialkyl ether, diethylene glycol dialkyl ether, triethylene glycol dialkyl ether, tetraethylene glcyol dialkyl ether and polyethylene glycol dialkyl ether; various nonprotonic polar solvents such as dimethylformamide, dimethylacetamide, N-methyl-2-pyrrolidone, dimethylimidazolidinone, hexamethyl phosphoric triamide and dimethyl sulfoxide; halogen solvents such as methylene chloride, chloroform, dichloroethane trichloroethane and trichloroethylene; and freon solvents. These solvents can also be used in mixtures of two or more. The washing solvent may contain components other than solvents, for examples, inorganic salts, surfactants and detergents.

We shall now describe the boiling treatment.

The boiling treatment is a method in which the polymer or ophthalmic lens of this invention is immersed in water or various types of aqueous solutions and they are heated to temperatures on the order of 80°C to 200°C. Heating at temperatures greater than 100°C is possible by using an autoclave. The optimum period during which the polymer or ophthalmic lens is subjected to boiling treatment varies depending on temperature. In general, a period of up to 100 hours is desirable, a period of up to 24 hours is more desirable and a period up to 12 hours is most desirable. When the boiling treatment time is too long, workability and productivity deteriorate and there are instances in which such deleterious effects as decrease in mechanical properties occurs.

The aqueous solution that is used in the boiling treatment can be a pH buffer solution or a protein aqueous solution. A pH buffer solution having weak alkalinity is preferable.

The wettability of the polymer or ophthalmic lens of this invention should be such that the dynamic angle of contact (immersion rate during advance, 0.1 mm/sec) for pure water is 85° or less. The oxygen permeability coefficient should be greater than 52 × 10⁻¹¹ (cm²/sec) [mLO₂/(mL·hPa)], and, preferably, greater than 60 × 10⁻¹¹ (cm²/sec) [mLO₂/(mL·hPa)] in terms of the oxygen permeability.

The monomers and polymers of this invention can be used suitably as ophthalmic lenses such as contact lenses, intraocular lenses and artificial corneas. Of these, it is most suitable for use as contact lenses.

### Examples

We shall now describe this invention in specific terms by means of examples. However, this invention is not limited by them.

### Determination Methods

The various determinations in these examples were performed by the methods described below.

### (1) Proton nuclear magnetic resonance spectrum

Determinations were performed using a Model EX270 manufactured by JEOL Ltd. Chloroform-d was used as the solvent and the chloroform peak was taken as the internal standard (7.26 ppm).

### (2) Dynamic angle of contact

A sample of a size on the order of 5 mm × 10 mm × 0.2 mm was used and the dynamic angle of contact was determined during advance using a Model WET-6000 manufactured by Rhesca Co., Ltd. The immersion speed was 0.1 mm/sec and the immersion depth was 7 mm.

### (3) Oxygen permeability coefficient

The oxygen permeability coefficient of the sample in water of 35°C was determined using a Seikaken-shiki film oxygen permeability meter manufactured by RIKA SEIKI KOGYO Co., Ltd.

### Example of Synthesis 1

### Synthesis of Compound of Formula (J1)

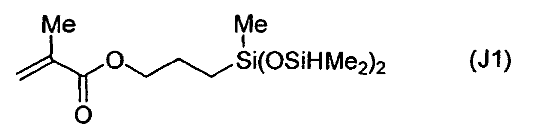

Hexane (150 g), methanol (150 g) and water (300 g) were introduced into a 2 L three-neck flask. The flask was immersed in an ice bath and the contents of the flask were stirred vigorously with a three-one motor. A mixture consisting of 3-methacryloxypropylmethyldimethoxysilane ("AY43-060," manufactured by Dow Corning Toray Silicone Co., Ltd.) (313.7 g) and dimethylchlorosilane (510.9 g) was added dropwise over a period of approximately 2 hours. At this time, the temperature in the flask was approximately 10°C. After the dropwise addition had been completed, stirring was continued at room temperature for 4.5 hours. The reaction solution was separated into two layers and the top layer was collected with a separatory funnel. It was then washed three times with a saturated aqueous solution of sodium hydrogen carbonate and 5 times with a saturated saline solution.
Dehydration was performed with anhydrous sodium sulfate, after which the solvent was removed with a rotary vacuum evaporator. Distillation under reduced pressure was performed twice to effect purification and the compound of formula (J1), i.e., 3-methacryloxypropylmethylbis(dimethylsiloxy)silane (206 g) was obtained as a colorless transparent liquid.

### Example of Synthesis 2

### Synthesis of Compound of Formula (J2)

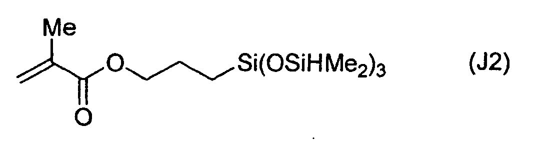

Hexane (50 g), methanol (50 g) and water (100 g) were introduced into a 1 L three-neck flask. The flask was immersed in an ice bath and the contents of the flask were stirred vigorously with a three-one motor. A mixture consisting of 3-methacryloxypropyltrimethoxysilane ("Sila-Ace S710," manufactured by CHISSO CORPORATION) (74.5 g, 0.30 mol) and dimethylchlorosilane (170 g, 1.8 mol) was added dropwise over a period of approximately 1 hour. At this time, the temperature in the flask was 5 to 30°C. After the dropwise addition had been completed, stirring was continued at 5 to 20°C for 3 hours. Water (approximately 200 mL) was added. The reaction solution was separated into two layers and the top layer was collected with a separatory funnel. It was then washed with a saturated aqueous solution of sodium hydrogen carbonate, a saturated saline solution and a saturated aqueous solution of sodium hydrogen carbonate in that order. Dehydration was performed with anhydrous sodium sulfate, after which the solvent was removed with a rotary vacuum evaporator. Purification was performed by distillation under reduced pressure and the compound of formula (J2), i.e., 3-methacryloxypropyltris(dimethylsiloxy)silane (106 g) was obtained as a colorless transparent liquid.

### Example of Synthesis 3

### Synthesis of Compound of Formula (J3)

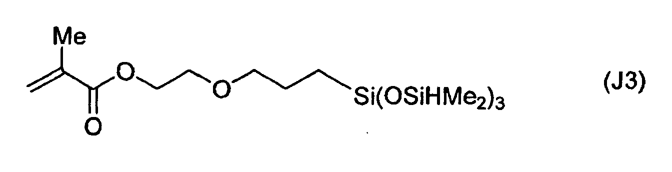

### (1) Synthesis of 3-(2-methacryloxyethoxy)propyltrichlorosilane

2-allyloxyethylmethacrylate (51.1 g), toluene (110 g) and trichlorosilane (44.7 g) were introduced into a 300 mL eggplant type flask equipped with a dropping funnel to which a calcium chloride tube was attached. A solution consisting of chloroplatinic acid 6-hydrate (0.5 g) and tetrahydrofuran (25 mL) was added and the mixture was stirred at room temperature. Stirring was performed for 20 hours at room temperature. The low boiling point components were removed by means of a rotary vacuum evaporator, after which purification was performed by distillation under reduced pressure and 3-(2-methacryloxyethoxy)propyltrichlorosilane (65.26 g) was obtained as a colorless transparent liquid.

### (2) Synthesis of Compound of Formula (J3)

A 1 L three-neck flask containing hexane (35.6 g), methanol (35.6 g) and water (71.2 g) was immersed in an ice bath and the contents of the flask were stirred vigorously with a three-one motor. A mixture consisting of 3-(2-methacryloxyethoxy)propyltrichlorosilane (65.26 g) and chlorodimethylsilane (120.7 g) was added dropwise over a period of approximately 0.5 hour. After the dropwise addition had been completed, stirring was continued at room temperature for 9.5 hours. The reaction solution was separated into two layers and the top layer was collected with a separatory funnel. It was then washed with a saturated aqueous solution of sodium hydrogen carbonate (3 times) and water (3 times) in that order. Dehydration was performed with anhydrous sodium sulfate, after which the solvent was removed with a rotary vacuum evaporator. Purification was performed by distillation under reduced pressure and the compound of formula (J3) was obtained as a pale yellow transparent liquid.

### Example of Synthesis 4

### Synthesis of Compound of Formula (J4)

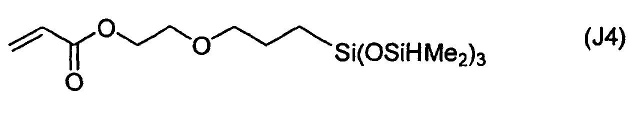

### (1) Synthesis of 3-(2-acryloxyethoxy)propyltrichlorosilane

2-allyloxyethylacrylate (70.0 g), toluene (110 g) and trichlorosilane (66.8 g) were introduced into a 300 mL eggplant type flask equipped with a dropping funnel to which a calcium chloride tube was attached. A solution consisting of chloroplatinic acid 6-hydrate (0.5 g) and tetrahydrofuran (25 mL) was added and the mixture was stirred at room temperature. Stirring was performed for 20 hours at room temperature. The low boiling point components were removed by means of a rotary vacuum evaporator, after which purification was performed by distillation under reduced pressure and 3-(2-acryloxyethoxy)propyltrichlorosilane (75.6 g) was obtained as a colorless transparent liquid.

### (2) Synthesis of Compound of Formula (J4)

A 1 L three-neck flask containing hexane (43.2 g), methanol (43.2 g) and water (86.4 g) was immersed in an ice bath and the contents of the flask were stirred vigorously with a three-one motor. A mixture consisting of 3-(2-acryloxyethoxy)propyltrichlorosilane (75.6 g) and chlorodimethylsilane (147.0 g) was added dropwise over a period of approximately 0.5 hour. After the dropwise addition had been completed, stirring was continued at room temperature for 9.5 hours. The reaction solution was separated into two layers and the top layer was collected with a separatory funnel. It was then washed with a saturated aqueous solution of sodium hydrogen carbonate (3 times) and water (3 times) in that order. Dehydration was performed with anhydrous sodium sulfate, after which the solvent was removed with a rotary vacuum evaporator. Purification was performed by distillation under reduced pressure and the compound of formula (J4) was obtained as a pale yellow transparent liquid.

### Example 1

### Synthesis of Compound of Formula (M1)

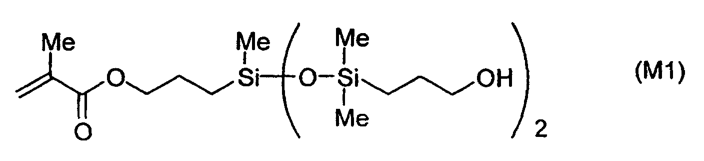

The compound of formula (J1) (20.0 g), allyl alcohol (150 g), a 10 weight % ethanol solution of potassium acetate (0.5 g) and an isopropyl alcohol solution of chloroplatinic acid (0.2 weight % as platinum, 0.5 g) were introduced into a 300 mL eggplant type flask equipped with a reflux condenser and magnetic rotor, and a reaction was carried out for 3.5 hours in an oil bath of 90°C as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.0 ppm (3H), in the vicinity of 0.1 ppm (12H), in the vicinity of 0.5 ppm (6H), in the vicinity of 1.6 ppm (6H), in the vicinity of 1.9 ppm (3H), in the vicinity of 2.2 ppm (2H), in the vicinity of 3.6 ppm (4H), in the vicinity of 4.1 ppm (2H), in the vicinity of 5.5 ppm (1H) and in the vicinity of 6.1 ppm (1H). From these findings, it was confirmed that this was the compound represented by formula (M1).

### Example 2

### Synthesis of Compound of Formula (M2)

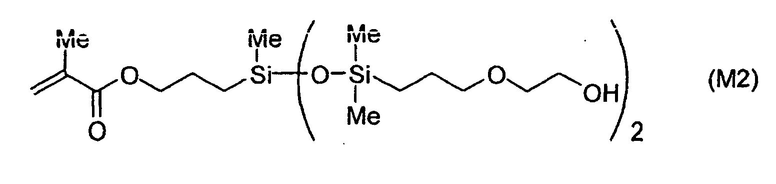

The compound of formula (J1) (20.0 g), 2-allyloxy ethanol (150 g), a 10 weight % ethanol solution of potassium acetate (0.5 g) and an isopropyl alcohol solution of chloroplatinic acid (0.2 weight % as platinum, 0.5 g) were introduced into a 300 mL eggplant type flask equipped with a reflux condenser and magnetic rotor, and a reaction was carried out for 3.5 hours in an oil bath of 90°C as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.0 ppm (3H), in the vicinity of 0.1 ppm (12H), in the vicinity of 0.5 ppm (6H), in the vicinity of 1.6 ppm (6H), in the vicinity of 1.9 ppm (3H), in the vicinity of 2.5 ppm (2H), in the vicinity of 3.4 ppm (4H), in the vicinity of 3.5 ppm (4H), in the vicinity of 3.7 ppm (4H), in the vicinity of 4.1 ppm (2H), in the vicinity of 5.5 ppm (1H) and in the vicinity of 6.1 ppm (1H). From these findings, it was confirmed that this was the compound represented by formula (M2).

### Example 3

### Synthesis of Compound of Formula (M3)

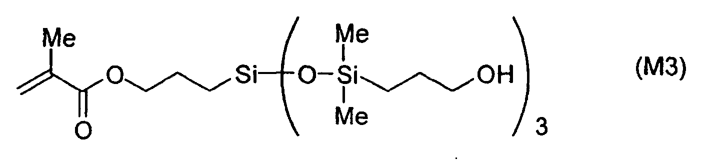

The compound of formula (J2) (20.0 g), allyl alcohol (300 g), a 10 weight % ethanol solution of potassium acetate (0.5 g) and an isopropyl alcohol solution of chloroplatinic acid (0.2 weight % as platinum, 0.5 g) were introduced into a 300 mL eggplant type flask equipped with a reflux condenser and magnetic rotor, and a reaction was carried out for 3.5 hours in an oil bath of 90°C as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.1 ppm (18H), in the vicinity of 0.5 ppm (8H), in the vicinity of 1.6 ppm (8H), in the vicinity of 1.9 ppm (3H), in the vicinity of 2.2 ppm (3H), in the vicinity of 3.6 ppm (6H), in the vicinity of 4.1 ppm (2H), in the vicinity of 5.5 ppm (1H) and in the vicinity of 6.1 ppm (1H). From these findings, it was confirmed that this was the compound represented by formula (M3).

### Example 4

### Synthesis of Compound of Formula (M4)

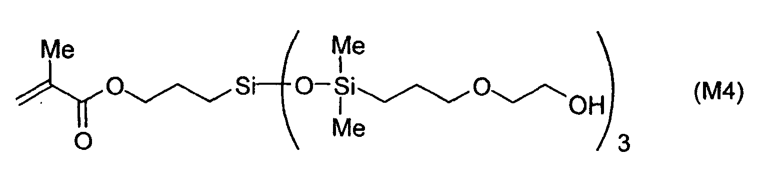

The compound of formula (J2) (20.0 g), 2-allyloxy ethanol (300 g), a 10 weight % ethanol solution of potassium acetate (0.5 g) and an isopropyl alcohol solution of chloroplatinic acid (0.2 weight % as platinum, 0.5 g) were introduced into a 300 mL eggplant type flask equipped with a reflux condenser and magnetic rotor, and a reaction was carried out for 3.5 hours in an oil bath of 90°C as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.1 ppm (18H), in the vicinity of 0.5 ppm (8H), in the vicinity of 1.6 ppm (8H), in the vicinity of 1.9 ppm (3H), in the vicinity of 2.5 ppm (3H), in the vicinity of 3.4 ppm (6H), in the vicinity of 3.5 ppm (6H), in the vicinity of 3.7 ppm (6H), in the vicinity of 4.1 ppm (2H), in the vicinity of 5.5 ppm (1H) and in the vicinity of 6.1 ppm (1H). From these findings, it was confirmed that this was the compound represented by formula (M4).

### Example 5

### Synthesis of Compound of Formula (M5)

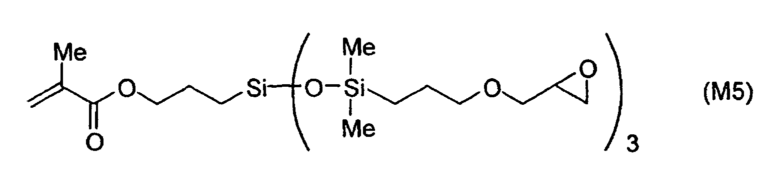

The compound of formula (J2) (7.6 g), allylglycidyl ether (34.2 g) and 2,6-di-t-butyl-4-methylphenol (20 mg) were introduced into a 100 mL eggplant type flask equipped with a reflux condenser and magnetic rotor. A solution (0.1 g) consisting of chloroplatinic acid 6-hydrate (0.22 g), 2-propanol (0.9 g) and tetrahydrofuran (8.2 g) was added. A reaction was carried out for 30 hours in an oil bath of 45°C as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.1 ppm (18H), in the vicinity of 0.5 ppm (8H), in the vicinity of 1.6 ppm (8H), in the vicinity of 1.9 ppm (3H), in the vicinity of 2.6 ppm (3H), in the vicinity of 2.8 ppm (3H), in the vicinity of 3.1 ppm (3H), in the vicinity of 3.4 ppm (9H), in the vicinity of 3.7 ppm (3H), in the vicinity of 4.1 ppm (2H), in the vicinity of 5.5 ppm (1H) and in the vicinity of 6.1 ppm (1H). From these findings, it was confirmed that this was the compound represented by formula (M2).

### Example 6

### Synthesis of Compound of Formula (M6)

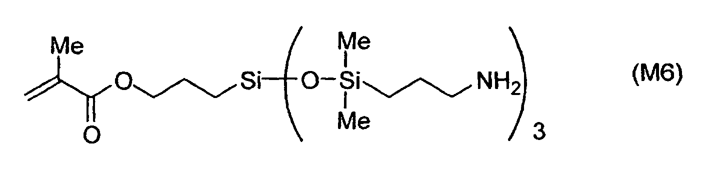

The compound of formula (J2) (10.3 g) and allylamine (100 g) were introduced into a 200 mL eggplant type flask equipped with a reflux condenser and magnetic rotor. A solution (0.1 g) consisting of chloroplatinic acid 6-hydrate (0.22 g), 2-propanol (0.9 g) and tetrahydrofuran (8.2 g) was added. A reaction was carried out for 60 hours at reflux temperature as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.1 ppm (18H), in the vicinity of 0.5 ppm (8H), in the vicinity of 1.2 ppm (6H), in the vicinity of 1.6 ppm (8H), in the vicinity of 1.9 ppm (3H), in the vicinity of 2.6 ppm (6H), in the vicinity of 4.1 ppm (2H), in the vicinity of 5.5 ppm (1H) and in the vicinity of 6.1 ppm (1H). From these findings, it was confirmed that this was the compound represented by formula (M6).

### Example 7

### Synthesis of Compound of Formula (M7)

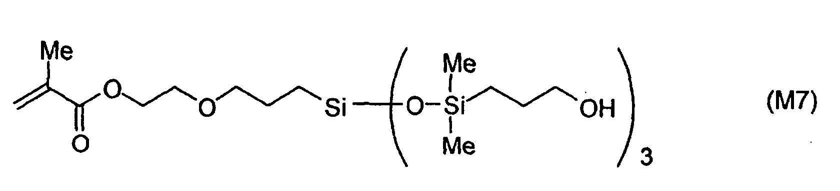

The compound of formula (J3) (20.0 g), allyl alcohol (300 g), a 10 weight % ethanol solution of potassium acetate (0.5 g) and an isopropyl alcohol solution of chloroplatinic acid (0.2 weight % as platinum, 0.5 g) were introduced into a 300 mL eggplant type flask equipped with a reflux condenser and magnetic rotor, and a reaction was carried out for 3.5 hours in an oil bath of 90°C as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.1 ppm (18H), in the vicinity of 0.5 ppm (8H), in the vicinity of 1.6 ppm (8H), in the vicinity of 1.9 ppm (3H), in the vicinity of 2.2 ppm (3H), in the vicinity of 3.4 ppm (2H), in the vicinity of 3.6 ppm (8H), in the vicinity of 4.1 ppm (2H), in the vicinity of 5.5 ppm (1H) and in the vicinity of 6.1 ppm (1H). From these findings, it was confirmed that this was the compound represented by formula (M7).

### Example 8

### Synthesis of Compound of Formula (M8)

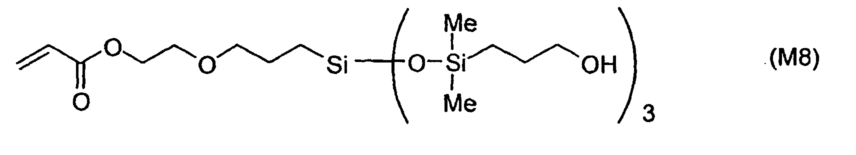

The compound of formula (J4) (20.0 g), allyl alcohol (300 g), a 10 weight % ethanol solution of potassium acetate (0.5 g) and an isopropyl alcohol solution of chloroplatinic acid (0.2 weight % as platinum, 0.5 g) were introduced into a 300 mL eggplant type flask equipped with a reflux condenser and magnetic rotor, and a reaction was carried out for 3.5 hours in an oil bath of 90°C as the mixture was being stirred. The low boiling point components were removed with a rotary vacuum evaporator. Purification was performed by silica gel column chromatography (developing solvent, ethyl acetate/hexane) and a pale yellow transparent liquid was obtained. The proton nuclear magnetic resonance spectrum of this liquid was analyzed. As a result, peaks were detected in the vicinity of 0.1 ppm (18H), in the vicinity of 0.5 ppm (8H), in the vicinity of 1.6 ppm (8H), in the vicinity of 2.2 ppm (3H), in the vicinity of 3.4 ppm (2H), in the vicinity of 3.6 ppm (8H), in the vicinity of 4.1 ppm (2H), in the vicinity of 5.8 ppm (1H), in the vicinity of 6.2 ppm (1H) and in the vicinity of 6.4 ppm (1H). From these findings, it was confirmed that this was the compound represented by formula (M8).

### Example 9

The compound of formula (M1) (70 parts by weight) obtained in Example 1, N,N-dimethylacrylamide (30 parts by weight), triethylene glycol dimethacrylate (1 part by weight) and the polymerization initiator "Darocure 1173" (0.5 part by weight; manufactured by CIBA Specialty Chemicals Inc.) were mixed uniformly and this monomer mixture was deaerated in an argon atmosphere. It was then poured into a contact lens mold made of a transparent resin (poly 4-methylpentene-1) in a glove box in a nitrogen atmosphere, polymerization was effected with irradiated light (1 mW/cm², 10 minutes) using an insect attraction lamp, and a contact lens shaped sample was obtained. The contact lens shaped sample that was obtained was immersed in pure water for 24 hours at room temperature, after which it was immersed for 24 hours at room temperature in a 0.25 M aqueous solution of sodium hydroxide. Said contact lens shaped sample was then washed with pure water, after which it was immersed in a boric acid buffer solution (pH 7.1 to 7.3) in a vial and the vial was hermetically sealed. Said vial was introduced into an autoclave and was subjected to boiling treatment for 30 minutes at 120°C. It was cooled, after which the contact lens shaped sample was removed from the vial and was immersed in pure water. Table 1 shows the physical property values of the contact lens shaped sample obtained. Said contact lens shaped sample had high oxygen permeability and a low contact angle (i.e., high hydrophilic properties).

### Examples 10 to 16

Polymerization and post-treatments were performed in exactly the same way as in Example 9 except that the compounds of formula (M2) to formula (M8) were used instead of the compound of formula (M1) (70 parts by weight), and contact lens shaped samples were obtained. The physical property values of the contact lens shaped samples that were obtained are shown in Table 1. Said contact lens shaped samples had high oxygen permeability and a low contact angle (i.e., high hydrophilic properties).

### Comparative Examples 1

Polymerization and post-treatments were performed in exactly the same way as in Example 9 except that 3-methacryloxypropyltris(trimethylsiloxy)silane [the compound of formula (J5)] was used instead of the compound of formula (M1) (70 parts by weight), and contact lens shaped samples were obtained. The physical property values of the contact lens shaped samples that were obtained are shown in Table 1. Although said contact lens shaped sample had high oxygen permeability, it had a high contact angle and inferior hydrophilic properties.

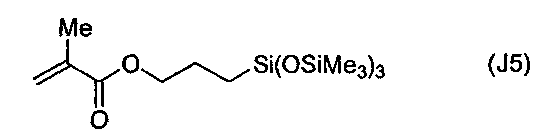

**Table 1**

| | Principal component | Oxygen permeability coefficient ¹) | Dynamic contact angle |
|---|---|---|---|
| Example 9 | Compound of formula (M1) | 66 × 10⁻¹¹ | 75 |
| Example 10 | Compound of formula (M2) | 61 × 10⁻¹¹ | 70 |
| Example 11 | Compound of formula (M3) | 76 × 10⁻¹¹ | 77 |
| Example 12 | Compound of formula (M4) | 73 × 10⁻¹¹ | 72 |
| Example 13 | Compound of formula (M5) | 68 × 10⁻¹¹ | 78 |
| Example 14 | Compound of formula (M6) | 75 × 10⁻¹¹ | 70 |
| Example 15 | Compound of formula (M7) | 68 × 10⁻¹¹ | 72 |
| Example 16 | Compound of formula (M8) | 70 × 10⁻¹¹ | 74 |
| Comparative Example 1 | Compound of formula (J5) | 90 × 10⁻¹¹ | 88 |

| | | | |
|---|---|---|---|
| 1) Unit: (cm²/sec) [mLO²/(mL·hPa)]¹ | | | |

### Industrial Applicability

By means of this invention, polymers having high oxygen permeability and high hydrophilic properties and ophthalmic lenses, in particular, contact lenses comprising said polymers, can be obtained.

## Claims

1. A monomer that is represented by general formula (a) below: 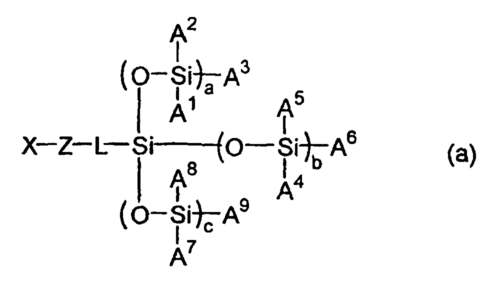 wherein, in formula (a), A¹ to A⁹, respectively and independently, indicate groups selected from the group consisting of H, alkyl groups having 1 to 8 carbon atoms, aralkyl groups having 6 to 12 carbon atoms, aryl groups having 6 to 10 carbon atoms and alkyl groups having 1 to 9 carbon atoms substituted with at least one group selected from epoxy groups, hydroxyl groups and amino groups, with at least one of A¹ to A⁹ indicating said alkyl group of 1 to 9 carbon atoms substituted with at least one group selected from epoxy groups, hydroxyl groups and amino groups; a, b and c, respectively and independently, indicate integers of 0 or 1; X indicates a polymerizable group having a carbon-carbon unsaturated bond; Z indicates groups selected from N-Y, O and S; Y indicates H or a substituent selected from an alkyl group having 1 to 8 carbon atoms that may be substituted and an aryl group having 6 to 10 carbon atoms that may be substituted; and L indicates a divalent group having 1 to 10 carbon atoms.

2. The monomer as set forth in Claim 1 wherein, in general formula (a), X is a group selected from groups represented by the following formulas (x1) to (x6): 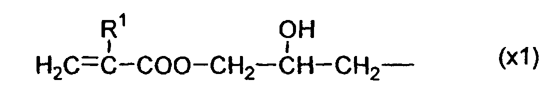 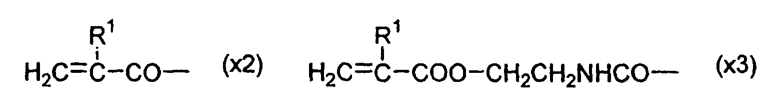 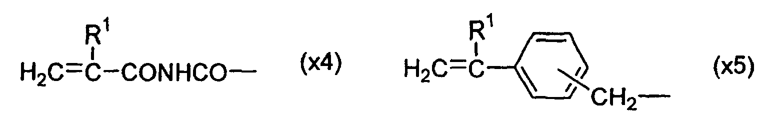 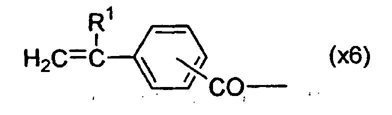 wherein, in formulas (x1) to (x6), R¹ represents H or methyl groups.

3. The monomer as set forth in Claim 2 wherein, in general formula (a), A¹ to A⁹, respectively and independently, indicate groups selected from H, methyl groups, glycidoxypropyl groups, hydroxypropyl groups, hydroxyethoxypropyl groups and aminopropyl groups, and at least one of A¹ to A⁹ represents a group selected from glycidoxypropyl groups, hydroxypropyl groups, hydroxyethoxypropyl groups and aminopropyl groups.

4. The monomer as set forth in Claim 3 wherein, in general formula (a), L is a group selected from groups represented by formulas (L1) to (L3) as indicated below.
-CH₂- (L1)
-CH₂CH₂CH₂- (L2)
-CH₂CH₂OCH₂CH₂CH₂- (L3)

5. The monomer as set forth in Claim 4 wherein, in general formula (a), L is a group represented by formula (L2).

6. The monomer as set forth in Claim 5 wherein, in general formula (a), Z represents O.

7. The monomer as set forth in Claim 6 wherein, in general formula (a), X is a group represented by formula (x2) below: 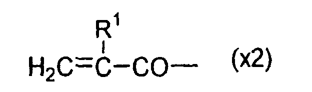 wherein, in formula (x2), R¹ represents H or methyl groups.

8. The monomer as set forth in Claim 1 wherein, in general formula (a), at least two of a, b and c are 1, and, moreover, at least two of A³, A⁶ and A⁹ are alkyl groups of 1 to 9 carbon atoms substituted with at least one group selected from epoxy groups, hydroxyl groups and amino groups.

9. The monomer as set forth in Claim 8 wherein, in general formula (a), all of a, b and c are 1, and, moreover, all of A³, A⁶ and A⁹ are alkyl groups of 1 to 9 carbon atoms substituted with at least one group selected from epoxy groups, hydroxyl groups and amino groups.

10. A polymer comprising the monomer as set forth in any one of Claims 1 to 9 as a polymerization component.

11. An ophthalmic lens comprising the polymer as set forth in Claim 10.

12. A contact lens comprising the polymer as set forth in Claim 10.
